# EUROPÄISCHE PATENTSCHRIFT

(11) **EP 2 633 790 B1**
(45) Veröffentlichungstag und Bekanntmachung des Hinweises auf die Patenterteilung: **25.06.2014**
(21) Anmeldenummer: 13157098.8
(22) Anmeldetag: 28.02.2013
(51) Int. Cl.: A47J 37/12, G01F 23/28

(54) **Gargerät sowie Verfahren zum Messen des Flüssigkeitsstands in einem Gargerät**
Cooking device and method for measuring the liquid level in a cooking device
Appareil de cuisson et procédé pour mesurer le niveau de liquide dans un appareil de cuisson

(30) Priorität: 02.03.2012 FR 1251943
(43) Veröffentlichungstag der Anmeldung: 04.09.2013
(73) Patentinhaber: Rational AG, 86899 Landsberg a. Lech (DE); FRIMA-T SAS, 68271 Wittenheim Cedex (FR)
(72) Erfinder: Leininger, Philippe, 68100 Mulhouse (FR); Wassmus, Reinhard, 79395 Neuenburg (DE); Lingenheil, Markus, 79206 Breisach/Oberrimsingen (DE); Kistler, Simone, 86825 Bad Woerishofen (DE)
(74) Vertreter: Prinz & Partner

(56) Entgegenhaltungen:
- WO-A1-98/01064
- WO-A2-2009/060192
- JP-A- 2005 050 713
- US-A1- 2005 178 197

## Beschreibung

Die Erfindung betrifft ein Gargerät, mit einem mit Flüssigkeit zu befüllenden Tiegel, einem schwenkbaren Deckel zum Schließen des Tiegels und einer berührungslos arbeitenden Messeinrichtung zur Bestimmung des Flüssigkeitsstandes im Tiegel. Darüber hinaus betrifft die Erfindung ein Verfahren zum Messen des Flüssigkeitsstandes in einem Tiegel eines Gargeräts mittels einer berührungslos arbeitenden Messeinrichtung, die wenigstens einen Emitter zum Abgeben von Strahlung sowie einen Sensor zum Empfangen der vom Emitter abgegebenen Strahlung umfasst, welche an der Flüssigkeitsoberfläche reflektiert wurde.

Ein solches Gargerät, bei dem in einem Tiegel das Gargut erhitzt wird, ist beispielsweise ein sogenannter Kipper, ein Kessel oder eine Fritteuse oder auch ein diese Geräte kombinierendes Allround-Gerät, wobei dies nicht einschränkend zu verstehen ist. Darüber hinaus gibt es von der Anmelderin auch Kombi-Geräte, bei denen im Tiegel Speisen durch unmittelbaren Kontakt mit dem Tiegelboden erhitzt, zum Beispiel gebraten oder angebraten werden können. Im Tiegel wird, je nach Einsatz, zum Beispiel Flüssigkeit eingefüllt, um diese zu erhitzen und das Gargut in die Flüssigkeit zu geben (zum Beispiel durch Zugabe von Öl bei Verwendung als Fritteuse oder von Wasser bei Verwendung als Kipper oder Kessel). Bei Einsatz des Tiegels zum Braten oder Anbraten wird der Tiegel nach dem Zubereiten des Garguts mit Reinigungsflüssigkeit gefüllt.

Wegen dieser Einsatzzwecke kann es sinnvoll oder sogar zwingend erforderlich sein, den Flüssigkeitsstand im Tiegel vor oder während des Garens oder Reinigens zu bestimmen. Dies betrifft insbesondere Gargeräte mit einer automatischen Flüssigkeitszufuhr.

Aus der WO 2009/060192 A2 ist ein Gerät zum Kochen von Wasser bekannt, bei dem der Flüssigkeitsstand zum Beispiel mittels Ultraschall ermittelt wird. Emitter und Sensor sind auf der Innenseite des Behälters angebracht, unter anderem auch am Deckel.

Aufgabe der Erfindung ist es, ein Gargerät sowie ein Verfahren zum Messen des Flüssigkeitsstandes in dem Tiegel eines Gargeräts zu schaffen, mittels dem das Gargerät universeller einsetzbar ist.

Diese Aufgabe wird bei einem Gargerät der eingangs genannten Art dadurch gelöst, dass zumindest ein Teil der Messeinrichtung am Deckel so angebracht ist, dass die Messeinrichtung den Flüssigkeitsstand bei geöffnetem Deckel erfasst.

Während im Stand der Technik bislang stets der Deckel geschlossen sein musste, um den Flüssigkeitsstand zu ermitteln, sieht die Erfindung die Anordnung zumindest von Teilen der Messeinrichtung am Deckel vor, wobei aber trotz der Schwenkbewegung des Deckels der Flüssigkeitsstand bei geöffnetem Deckel erfasst werden kann. Das bedeutet, die Strahlung, die von der Messeinrichtung auf die Flüssigkeitsoberfläche abgegeben und von dieser reflektiert wird, wird über den Deckel eingeleitet und/oder im Deckel wieder aufgenommen, um zum Sensor zu gelangen.

Die Anordnung von zumindest Teilen der Messeinrichtung am Deckel erlaubt es, weniger oder überhaupt keine Teile der Messeinrichtung innenseitig am Tiegel vorzusehen, sodass dieser deutlich besser gereinigt werden kann und mit einer glatten, hinterschnittsfreien Innenwand ausgeführt sein kann. Das Hochschwenken des Deckels sorgt dann für eine leichtere Zugänglichkeit der Messeinrichtung entweder zur Reinigung der Messeinrichtung oder auch zu deren Montage oder Demontage. Die Messung bei geöffnetem Deckel ist besonders für Garvorgänge vorteilhaft, welche stets bei geöffnetem oder teilweise geöffnetem Deckel erfolgen, aber dennoch einer Füllstandsüberwachung unterliegen müssen. Dies ist zum Beispiel beim Nudelgaren mit Körben der Fall. Auch das Ausgießen, welches üblicherweise bei geöffnetem Deckel erfolgt, kann automatisch erfolgen, um exaktes Portionieren zu ermöglichen. Es ist jetzt also nicht mehr nötig, vor dem Ausgießen den Deckel zu schließen, um eine exakte Ausgangsmessung zu haben.

Das zumindest eine Teil (z.B. ein Emitter, ein Sensor und/der ein Reflektor) kann z.B. innenseitig am Deckel angebracht sein.

Die Messeinrichtung umfasst gemäß der bevorzugten Ausführungsform einen Emitter für die Strahlung und einen Sensor (auch Detektor oder Receptor genannt) zur Aufnahme der Strahlung, von dem zumindest einer, vorzugsweise jedoch beide, am Deckel angebracht sind.

Eine weitere bezüglich Wartung und Belastung der Messeinrichtung optimierte Ausführungsform sieht vor, einen Reflektor am Deckel anzubringen. Dieser Reflektor reflektiert einen zum und/oder von der Flüssigkeitsoberfläche gelangenden bzw. kommenden Messstrahl. Das bedeutet, der Emitter und/oder Sensor muss nicht mehr innenseitig oder überhaupt am Deckel angebracht sein, sondern kann außenseitig oder vom Deckel entkoppelt vorhanden sein, wobei aber der Messstrahl über den Reflektor ins Innere des Tiegels gelenkt wird.

Der Reflektor ist zum Beispiel aus Glas, Kunststoff oder Metall.

Wie bereits erläutert, ist es denkbar, den Emitter und/oder den Sensor auf einem vom Deckel entkoppelten Teil vorzusehen, zum Beispiel an einem Gehäuse des Gargeräts. Der Messstrahl wird über den Reflektor in das oder aus dem Tiegelinneren gelenkt.

Emitter und/oder Sensor können zum Beispiel seitlich des Tiegels positioniert sein, und zwar so, dass der Messstrahl parallel zur Schwenkachse des Deckels ausgerichtet ist.

Der Emitter und/oder der Sensor können auf der Außenseite des Deckels vorhanden sein, unabhängig von der Verwendung des Reflektors. Gegebenenfalls werden Glas- oder Kunststofffenster in den Deckel eingebracht, um den Emitter oder Sensor vor der Flüssigkeit und dem Dampf im Tiegel zu schützen.

Alternativ zur Anordnung von Emitter und/oder Sensor auf der Deckelaußenseite oder entkoppelt vom Deckel, können Emitter und/oder Sensor natürlich auch auf der Deckelinnenseite sitzen, das heißt zumindest auf der Deckelinnenseite ihren Auslass bzw. Einlass für die Strahlung besitzen.

Eine Ausführungsform der Erfindung sieht vor, Emitter, Sensor und/oder Reflektor nahe an der Schwenkachse zu positionieren, damit die Bewegungsstrecke des am Deckel sitzenden Teils der Messeinrichtung beim Schwenken des Deckels gering ist, die zwischen verschiedenen Öffnungspositionen zurückgelegt wird. Ausgehend von der Schwenkachse besitzt der Deckel eine radial von der Schwenkachse gemessene maximale Breite. Die bevorzugte Ausführungsform sieht vor, Emitter, Sensor und/oder Reflektor mit einem Abstand von der Schwenkachse anzuordnen, der maximal 25 % der Breite des Deckels entspricht.

Obwohl Emitter und Sensor natürlich als separate Einheiten und separate Teile ausgeführt sein können, sieht eine Ausführungsform der Erfindung vor, Emitter und Sensor als Einheit auszubilden, sodass nur ein Teil am Gargerät zu befestigen ist.

Die von der Messeinrichtung verwendete Strahlung ist elektromagnetischer Art, optischer Art und/oder akustischer Art. Das bedeutet, es wird beispielsweise mit Ultraschall, Infrarotstrahlung, Radarstrahlung, Mikrowellenstrahlung, Laserstrahlung und/oder, allgemeiner, Lichtstrahlung gearbeitet. Bei Versuchen hat sich die Ultraschallstrahlung als relativ problemlos herausgestellt.

Die obige Aufgabe wird auch durch ein Verfahren zum Messen des Flüssigkeitsstandes in einem Tiegel eines Gargeräts gelöst, mittels einer berührungslos arbeitenden, zumindest teilweise am Deckel sitzenden Messeinrichtung. Das Verfahren sieht vor, den Flüssigkeitsstand bei geöffnetem Deckel zu bestimmen.

Generell gilt für das erfindungsgemäße Gargerät und das erfindungsgemäße Verfahren, dass zumindest bei vollständig geöffnetem Deckel die Messung durchgeführt wird. Bevorzugte Ausführungsformen sehen jedoch auch vor, dass bei teilweise geöffnetem Deckel eine Füllstandsmessung möglich ist, gegebenenfalls sogar zusätzlich auch noch bei geschlossenem Deckel. Hierzu können dieselben Emitter/Sensoren oder zusätzliche vorhanden sein.

In diesem Zusammenhang ist es vorteilhaft, wenn eine Einrichtung zum Bestimmen des Öffnungswinkels des Deckels vorhanden ist. Über den Öffnungswinkel des Deckels lassen sich dann die bei unterschiedlichen Öffnungswinkeln unterschiedlichen Laufzeiten der Strahlung kompensieren.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine perspektivische Frontansicht einer ersten Ausführungsform des erfindungsgemäßen Gargeräts bei geöffnetem Deckel,
- Figur 2 eine perspektivische Frontansicht einer zweiten Ausführungsform des erfindungsgemäßen Gargeräts, ebenfalls bei geöffnetem Deckel,
- Figur 3 eine schematische Schnittansicht durch eine dritte Ausführungsform des erfindungsgemäßen Gargeräts, und
- Figur 4 eine Detailansicht des Deckels im Bereich der Messeinrichtung von Figur 3.

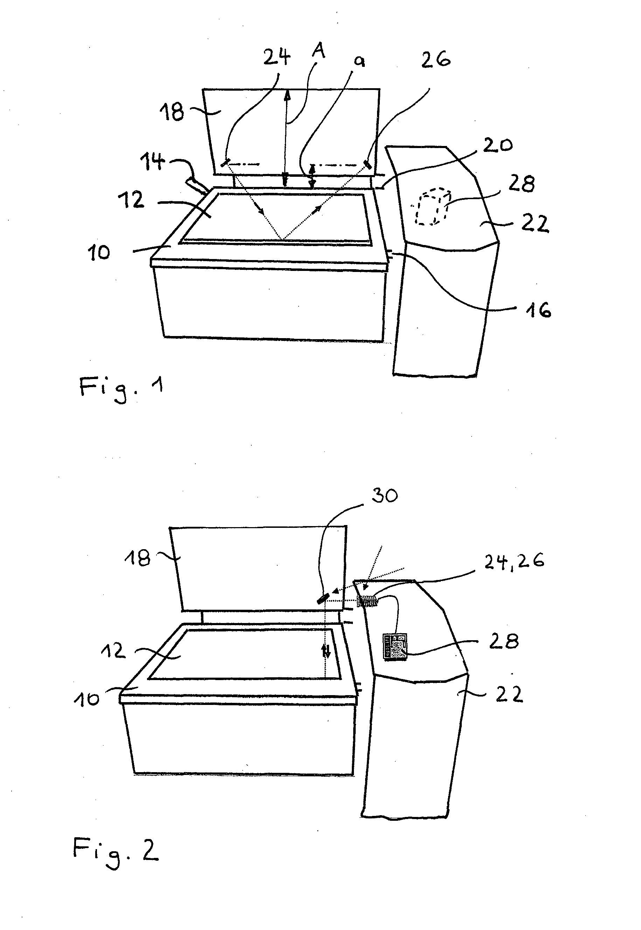

In Figur 1 ist ein Gargerät dargestellt, das vorliegend als kombinierter Kipper, Kessel, Fritteuse und dergleichen ausgeführt ist.

Das Gargerät umfasst einen Tiegel 10 mit einer wannenförmigen Vertiefung 12, in die Flüssigkeit vorzugsweise automatisch über einen Zulauf 14 eingebracht wird. Die Flüssigkeit kann Wasser, Öl oder auch Reinigungsflüssigkeit sein. Eine automatische Flüssigkeitszufuhr ist nicht zwingend erforderlich, aber vorteilhaft.

Der Tiegel 10 ist insbesondere kippbar um eine Achse 16 ausgeführt, sodass der Tiegel 10 leicht entleert werden kann, aber auch vollautomatisch exakte Portionen, zum Beispiel von Suppe oder Soßen ausgegossen werden können.

Der Tiegel 10 ist durch einen Deckel 18 vollständig oder teilweise verschließbar. Der Deckel 18 ist um eine Schwenkachse 20 schwenkbar am bzw. zum Tiegel 10 gelagert und kann verschiedene Öffnungspositionen innehaben. Gezeigt ist die vollständig geöffnete Position.

Ein stationäres Gehäuse 22 bildet die Lagerung für den kippbaren Tiegel 10.

Das Gargerät ist mit einer elektronischen Messeinrichtung zum Bestimmen des Füllstandes der sich im Tiegel 10 befindlichen Flüssigkeit ausgestattet.

Die Messeinrichtung arbeitet berührungslos, vorzugsweise mit elektromagnetischer, optischer und/oder akustischer Strahlung. In der dargestellten Ausführungsform wird Ultraschallstrahlung, Infrarotstrahlung, Radarstrahlung, Mikrowellenstrahlung, Licht- oder Laserstrahlung verwendet.

Die Messeinrichtung umfasst unter anderem wenigstens einen Emitter 24 zum Abgeben der Strahlung sowie einen Sensor 26 zum Empfangen der vom Emitter abgegebenen Strahlung, welche an der Flüssigkeitsoberfläche reflektiert wurde.

Das Besondere der Messeinrichtung besteht darin, dass zumindest Teile der Messeinrichtung am Deckel 18 so angebracht sind, dass die Messeinrichtung den Flüssigkeitsstand bei geöffnetem Deckel 18 erfasst.

Bei der in Figur 1 gezeigten Ausführungsform sind sowohl Emitter 24 als auch Sensor 26 am Deckel befestigt.

Bei der dargestellten Ausführungsform, die jedoch nur exemplarisch zu verstehen ist, wird vom Emitter 24 die Strahlung schräg abwärts und bezogen auf die Schwenkachse 20 in etwa zur Mitte des Bodens des Tiegels 10 abgegeben. Die Strahlung wird dann entweder, wenn keine Flüssigkeit vorhanden ist, vom Boden des Tiegels oder von der Flüssigkeitsoberfläche reflektiert und vom Sensor 26 erfasst.

Mit dem Emitter 24 und dem Sensor 26 ist eine Steuerung 28 gekoppelt, welche über die Laufzeit der Strahlung die Füllstandshöhe erfasst. Die Steuerung 28 kann auch Daten aufnehmen, die spezifisch für den Schwenkwinkel des Tiegels 10 sind und einen Motor ansteuern, der den Tiegel 10 kippt. Darüber hinaus ist es von Vorteil, wenn bei einer automatischen Flüssigkeitszufuhr die Steuerung 28 mit einem Zulaufventil gekoppelt ist.

Denkbar ist auch, die Messeinrichtung so auszuführen, dass sie bei unterschiedlichen Öffnungswinkeln des Deckels 18 und nicht nur bei vollständig geöffnetem Deckel 18 die Füllstandshöhe bestimmt. Um dies zu ermöglichen, müssen Daten für die Position des Deckels 18 relativ zum Tiegel 10 geliefert werden, zum Beispiel über einen Winkelgeber oder über einen weiteren Sensor.

Bei der gezeigten Ausführungsform nach Figur 1 haben Emitter 24 und Sensor 26 ihren Ausgang bzw. Eingang auf der Deckelinnenseite, wobei sie natürlich auch durch den Deckel hindurchragen können, um eine möglichst glatte Deckelinnenseite zu gewährleisten.

Alternativ hierzu können Emitter 24 und/oder Sensor 26 auch auf der Außenseite des Deckels vorhanden sein und über Fenster die Strahlung abgeben bzw. empfangen.

Die Position von Emitter 24 und Sensor 26 ist möglichst nahe an der Schwenkachse 20. Der Abstand a von der Schwenkachse beträgt maximal 25 % des Abstands A des von der Schwenkachse 20 maximal entfernten Randes des Deckels 18.

Anstatt eines vom Emitter 24 getrennten Sensors 26 können Emitter 24 und Sensor 26 natürlich auch zu einer kombinierten Einheit ausgeführt sein. Dies betrifft sämtliche Ausführungsformen.

Bei der Ausführungsform nach Figur 2 sitzt der kombinierte Emitter/Sensor 24, 26 an einem vom Deckel 18 entkoppelten Teil, hier dem Gehäuse 22. Die abgegebene bzw. reflektierte Strahlung wird über einen auf der Innenseite des Deckels 18 sitzenden Reflektor 30 bei geöffnetem Deckel 18 in die Vertiefung 12 des Tiegels 10 gelenkt. Die vom Boden des Tiegels 10 oder der Flüssigkeitsoberfläche reflektierte Strahlung wird ebenfalls vom Reflektor 30 umgelenkt und trifft auf die Einheit aus Emitter und Sensor 24, 26. Auch bei dieser Ausführungsform kann es möglich sein, die Füllstandshöhe nicht nur bei vollständig geöffnetem Deckel 18, sondern auch bei teilweise geöffnetem Deckel 18 zu erfassen. In diesem Zusammenhang wird auf die Ausführungen zu Figur 1 verwiesen.

Natürlich ist es bezogen auf Figur 2 auch möglich, einen vom Emitter 24 getrennten Sensor 26 vorzusehen und mit einem gemeinsamen oder verschiedenen Reflektoren 30 zu arbeiten. Als Reflektormaterialien kommen Glas, Kunststoff oder Metall infrage.

Eine weitere Variante besteht darin, entweder den Emitter 24 oder den Sensor 26 am Deckel 18 anzuordnen und den jeweils anderen (das heißt Sensor bzw. Emitter) am Gehäuse 22 vorzusehen.

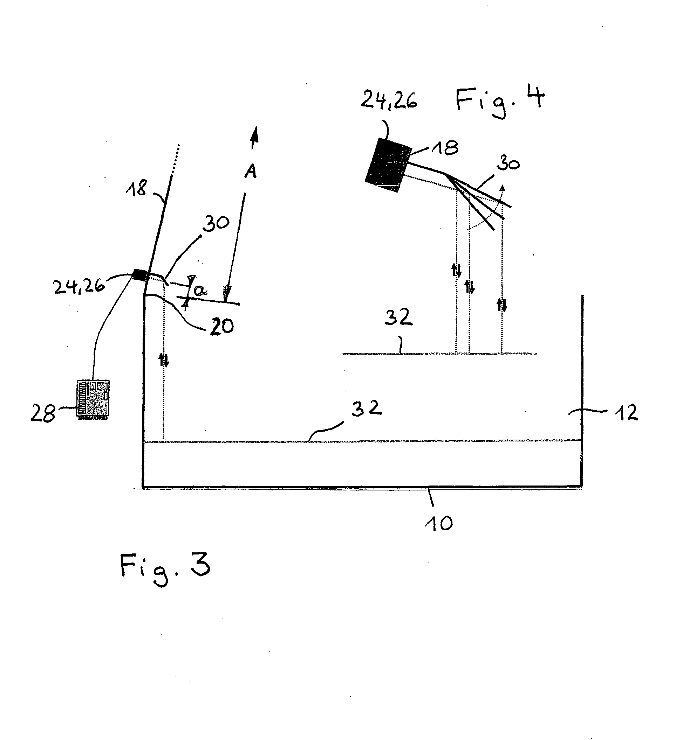

Die Ausführungsform nach Figur 3 umfasst eine kombinierte Einheit aus Emitter 24 und Sensor 26, die auf der Außenseite des Deckels 18 angebracht ist und über ein Fenster mit dem Tiegelinneren strahlungsmäßig gekoppelt ist. Ein schräg zur Deckelinnenseite ausgerichteter Reflektor 30 lenkt die Strahlung nach unten bzw. reflektierende Strahlung wieder zurück zum Sensor 26. Je nach Position und Ausrichtung des Reflektors 30 kann es möglich sein (siehe Figur 4), die Füllstandshöhe bei unterschiedlichen Öffnungswinkeln des Deckels 18 zu bestimmen. In Figur 3 ist die Flüssigkeitsoberfläche mit dem Bezugszeichen 32 versehen.

Das Fenster im Deckel 18 kann eine nicht abgedeckte Öffnung oder eine durch ein strahlungsdurchlässiges Teil abgedeckte Öffnung (zum Beispiel aus Glas oder Kunststoff) sein. Ob die Öffnung nicht abgedeckt ist oder mit welchem Material die Öffnung abgedeckt sein kann, hängt von der Art der Strahlung ab. Gewährleistet sein muss in jedem Fall, dass genügend Strahlung in das Tiegelinnere gelangt.

Auch bei den Ausführungsformen nach Figur 2 und 3 gilt im Übrigen, dass der Reflektor 30 nahe an der Schwenkachse 20 angebracht ist. Auch hier ist der Abstand des Reflektors a maximal 25 % des Abstands A des entferntesten Randes des Deckels 18 von der Schwenkachse 20.

Das entsprechend bei sämtlichen Ausführungsformen angewandte Verfahren zum Messen des Flüssigkeitsstandes in einem Tiegel eines Gargeräts sieht eine berührungslos arbeitende, zumindest teilweise am Deckel sitzende Messeinrichtung vor, bei dem der Flüssigkeitsstand bei geöffnetem Deckel 18 bestimmt wird.

## Patentansprüche

1. Gargerät, mit einem mit Flüssigkeit zu befüllenden Tiegel (10), einem schwenkbaren Deckel (18) zum Schließen des Tiegels (10) und einer berührungslos arbeitenden Messeinrichtung zur Bestimmung des Flüssigkeitsstandes im Tiegel (10), wobei die Messeinrichtung wenigstens einen Emitter zum Abgeben von Strahlung sowie einen Sensor zum Empfangen der vom Emitter abgegebenen Strahlung umfasst, welche an der Flüssigkeitsoberfläche reflektiert wird, **dadurch gekennzeichnet, dass** zumindest ein Teil der Messeinrichtung am Deckel so angebracht ist, dass die Messeinrichtung den Flüssigkeitsstand bei geöffnetem Deckel (18) erfasst.

2. Gargerät nach Anspruch 1, **dadurch gekennzeichnet, dass** das zumindest eine Teil innenseitig am Deckel (18) angebracht ist.

3. Gargerät nach Anspruch 2, **dadurch gekennzeichnet, dass** das innenseitig am Deckel (18) angebrachte Teil der Emitter (24), ein Sensor (26) und/der der Reflektor (30) ist.

4. Gargerät nach einem der Ansprüche 1 bis 3, **dadurch gekennzeichnet, dass** der Emitter (24) und/oder der Sensor (26) am Deckel (18) angebracht ist.

5. Gargerät nach einem der vorhergehenden Ansprüche, **dadurch gekennzeichnet, dass** ein Reflektor (30) am Deckel (18) angebracht ist, der einen zur und/oder von der Flüssigkeitsoberfläche laufenden Messstrahl reflektiert.

6. Gargerät nach Anspruch 5, **dadurch gekennzeichnet, dass** der Emitter (24) und/oder Sensor (26) auf einem vom Deckel (18) entkoppelten Teil vorgesehen ist und der Messstrahl über den Reflektor in das Tiegelinnere oder aus dem Tiegelinneren gelenkt wird.

7. Gargerät nach Anspruch 6, **dadurch gekennzeichnet, dass** der Emitter (24) und/oder Sensor (26) der Messeinrichtung seitlich des Tiegels (10) positioniert ist und der Messstrahl parallel zur Schwenkachse (20) des Deckels ausgerichtet ist.

8. Gargerät nach einem der vorhergehenden Ansprüche, **dadurch gekennzeichnet, dass** der Emitter (24) und/oder Sensor (26) der Messeinrichtung auf der Außenseite des Deckels (18) vorhanden ist.

9. Gargerät nach einem der vorhergehenden Ansprüche, **dadurch gekennzeichnet, dass** der Emitter (24) und/oder Sensor (26) der Messeinrichtung auf der Deckelinnenseite sitzt.

10. Gargerät nach einem der vorhergehenden Ansprüche, **dadurch gekennzeichnet, dass** der Emitter (24), der Sensor (26) und/oder ein Reflektor (30) der Messeinrichtung nahe an der Schwenkachse (20) des Deckels (18) sitzt.

11. Gargerät nach einem der vorhergehenden Ansprüche, **dadurch gekennzeichnet, dass** der Emitter (24) und der Sensor (26) der Messeinrichtung als gemeinsame Einheit ausgebildet sind.

12. Gargerät nach einem der vorhergehenden Ansprüche, **dadurch gekennzeichnet, dass** die Messeinrichtung elektromagnetische, optische und/oder akustische Strahlung verwendet.

13. Verfahren zum Messen des Flüssigkeitsstandes in einem Tiegel (10) eines Gargeräts nach einem der Ansprüche 1-12 mittels einer berührungslos arbeitenden, zumindest teilweise am Deckel (18) sitzenden Messeinrichtung, **dadurch gekennzeichnet, dass** der Flüssigkeitsstand bei geöffnetem Deckel (18) bestimmt wird.

## Claims

1. A cooking apparatus comprising a pan (10) to be filled with liquid, a swiveling lid (18) for closing the pan (10), and a measuring device operating in a non-contact manner for determining the liquid level in the pan (10), the measuring device comprising at least one emitter for emitting radiation and a sensor for receiving the radiation which is emitted by the emitter and reflected at the liquid surface, **characterized in that** at least one part of the measuring device is mounted to the lid such that the measuring device detects the liquid level when the lid (18) is open.

2. The cooking apparatus according to claim 1, **characterized in that** the at least one part is mounted to the inside of the lid (18).

3. The cooking apparatus according to claim 2, **characterized in that** the part mounted to the inside of the lid (18) is the emitter (24), a sensor (26) and/or the reflector (30).

4. The cooking apparatus according to any of claims 1 to 3, **characterized in that** the emitter (24) and/or the sensor (26) is mounted to the lid (18).

5. The cooking apparatus according to any of the preceding claims, **characterized in that** a reflector (30) is mounted to the lid (18) which reflects a measuring beam running to and/or from the liquid surface.

6. The cooking apparatus according to claim 5, **characterized in that** the emitter (24) and/or sensor (26) is provided on a part decoupled from the lid (18) and the measuring beam is directed into the interior of the pan or out of the interior of the pan via the reflector.

7. The cooking apparatus according to claim 6, **characterized in that** the emitter (24) and/or sensor (26) of the measuring device is positioned laterally of the pan (10) and the measuring beam is oriented parallel to the swiveling axis (20) of the lid.

8. The cooking apparatus according to any of the preceding claims, **characterized in that** the emitter (24) and/or sensor (26) of the measuring device is/are present on the outside of the lid (18).

9. The cooking apparatus according to any of the preceding claims, **characterized in that** the emitter (24) and/or sensor (26) of the measuring device is/are seated on the inside of the lid.

10. The cooking apparatus according to any of the preceding claims, **characterized in that** the emitter (24), the sensor (26) and/or a reflector (30) of the measuring device are seated close to the swiveling axis (20) of the lid (18).

11. The cooking apparatus according to any of the preceding claims, **characterized in that** the emitter (24) and the sensor (26) of the measuring device are configured as a common unit.

12. The cooking apparatus according to any of the preceding claims, **characterized in that** the measuring device uses electromagnetic, optical and/or acoustic radiation.

13. A method of measuring the liquid level in a pan (10) of a cooking apparatus according to any of claims 1-12 by means of a measuring device which operates in a non-contact manner and is seated at least partly at the lid (18), **characterized in that** the liquid level is determined with the lid (18) open.

## Revendications

1. Appareil de cuisson, comportant un creuset (10) à remplir de liquide, un couvercle (18) pivotant pour fermer le creuset (10), et un dispositif de mesure fonctionnant sans contact pour déterminer le niveau de liquide dans le creuset (10), le dispositif de mesure présentant au moins un émetteur pour l'émission de rayonnement, et un capteur pour la réception du rayonnement émis par l'émetteur, qui est reflété sur la surface du liquide, **caractérisé en ce qu'**au moins une partie du dispositif de mesure est montée sur le couvercle de telle sorte que le dispositif de mesure saisisse le niveau de liquide lorsque le couvercle (18) est ouvert.

2. Appareil de cuisson selon la revendication 1, **caractérisé en ce que** ladite au moins une partie est agencée sur la face intérieure du couvercle (18).

3. Appareil de cuisson selon la revendication 2, **caractérisé en ce que** la partie agencée sur la face intérieure du couvercle (18) est l'émetteur (24), un capteur (26) et/ou le réflecteur (30).

4. Appareil de cuisson selon l'une des revendications 1 à 3, **caractérisé en ce que** l'émetteur (24) et/ou le capteur (26) est agencé sur le couvercle (18).

5. Appareil de cuisson selon l'une des revendications précédentes, **caractérisé en ce qu'**un réflecteur (30) est monté sur le couvercle (18), lequel réfléchit un faisceau de travail courant vers et/ou depuis la surface du liquide.

6. Appareil de cuisson selon la revendication 5, **caractérisé en ce que** l'émetteur (24) et/ou le capteur (26) est prévu sur une pièce découplée du couvercle (18), et **en ce que** le faisceau de travail est guidé dans l'intérieur du creuset ou hors de l'intérieur du creuset par l'intermédiaire du réflecteur.

7. Appareil de cuisson selon la revendication 6, **caractérisé en ce que** l'émetteur (24) et/ou le capteur (26) du dispositif de mesure est positionné latéralement au creuset (10), et **en ce que** le faisceau de travail est orienté parallèlement à l'axe de pivotement (20) du couvercle.

8. Appareil de cuisson selon l'une des revendications précédentes, **caractérisé en ce que** l'émetteur (24) et/ou le capteur (26) du dispositif de mesure est présent sur la face extérieure du couvercle (18).

9. Appareil de cuisson selon l'une des revendications précédentes, **caractérisé en ce que** l'émetteur (24) et/ou le capteur (26) du dispositif de mesure est agencé sur la face intérieure de couvercle.

10. Appareil de cuisson selon l'une des revendications précédentes, **caractérisé en ce que** l'émetteur (24), le capteur (26) et/ou un réflecteur (30) du dispositif de mesure est agencé près de l'axe de pivotement (20) du couvercle (18).

11. Appareil de cuisson selon l'une des revendications précédentes, **caractérisé en ce que** l'émetteur (24) et le capteur (26) du dispositif de mesure sont réalisés sous forme d'unité commune.

12. Appareil de cuisson selon l'une des revendications précédentes, **caractérisé en ce que** le dispositif de mesure utilise un rayonnement électromagnétique, optique et/ou acoustique.

13. Procédé de mesure du niveau de liquide dans un creuset (10) d'un appareil de cuisson selon l'une des revendications 1 à 12 au moyen d'un dispositif de mesure fonctionnant sans contact qui est agencé au moins en partie sur le couvercle (18), **caractérisé en ce que** le niveau de liquide est déterminé lorsque le couvercle (18) est ouvert.
